# EUROPEAN PATENT SPECIFICATION

(11) **EP 2 560 347 B1**
(45) Date of publication and mention of the grant of the patent: **11.10.2017**
(21) Application number: 11178150.6
(22) Date of filing: 19.08.2011
(51) Int. Cl.: H04L 12/24, H04L 29/12, H04L 12/28

(54) **Building automation arrangement**
Gebäudeautomation
Domotique

(43) Date of publication of application: 20.02.2013
(73) Proprietor: VKR Holding A/S, 2970 Hørsholm (DK)
(72) Inventor: Nielsen, Martin Sandal, 6830 Norre Nebel (DK)
(74) Representative: Patentgruppen A/S

(56) References cited:
- WO-A2-02/49273
- WO-A2-2008/120120
- DE-A1-102007 031 721

## Description

### Field

The exemplary and non-limiting embodiments of this invention relate generally to control of building automation and more particularly to the replacement of appliances i.e. how the master configures new slaves.

### Background

Automation may be used to control windows, doors and access control, lighting, sun screening, heating, appliances etc.

Some automation systems have a central controller and when the data is managed centrally configuration is needed once only. However some automation systems use controls which do not have a central data management and consequently one controller does not know what settings other controllers store or change (i.e. separate control systems).

When appliances need to be reconfigured (removed, replaced, reset or added) it is cumbersome to re-configure all separate controllers in question.

For example US7694005B shows automation and deals with a different topic of interface between the transport layer and application layer. But it does mention (col. 16) that a new device may be updated with scene information from a lost device.

For example US20110184561 discloses (sun screening) automation which use identifiers (ID code) for addressing and parameters (for example type of screen) for discovery. The disclosure however deals with configuring large groups.

For example WO2008120120 discloses use of logical address and physical address and a memory for mapping the logical address with the physical address, but the logical address is used for easier user setup and not for configuration of the physical address.

For example WO200249273 discloses replacement of a component, which may include replacement of communications parameters (such as IP address, gateway address, network mask) but the replacement is based on topology.

### Summary

It would be desirable to provide automation which enhances the addition of new appliances.

Further it would be desirable to provide automation which enhances replacement of an old or defective appliance with a new replacement appliance.

Further it would be desirable to provide automation which may recover from reset appliances e.g. due to power loss or software updates etc.

According to the invention there is provided a method according to claim 1.

Further favourable embodiments are defined in the dependent claims. Other features and advantages of the disclosed embodiments will appear from the following detailed disclosure, from the attached dependent claims as well as from the drawings. Steps do need not be performed in the disclosed sequence, unless explicitly defined. All references to "a/an/the [element, master, slave, means, step, etc]" are to be interpreted openly as referring to at least one instance of the element, means, step, etc., unless explicitly stated otherwise.

### Brief description of the drawings

The foregoing and other aspects of the teachings of this invention are made more evident in the following description, when read in conjunction with the attached figures, wherein:
Fig. 1 shows an example of building automaiton.
Fig. 2 shows an example of master and slave registers.
Fig. 3 shows an example of replacement of slaves.
Fig. 4 shows a flow chart.
Fig. 5 shows an example of some slave identifiers.

### Detailed description

The disclosed embodiments will now be described more fully hereinafter with reference to the accompanying drawings, in which certain examples are shown. Like numbers refer to like elements throughout.

There are building automation systems which are wired or wireless and powered by constant power as often employed in large factories or commercial buildings. Other automation systems are wireless and powered by battery or renewable energy and such automation use very little power and have very little network activity and small payload to conserve power. Hence a central data management topology with higher data loads is less suitable for the popular battery or renewable powered automation.

Building automation control may for example take place between a controller and an appliance or between nodes or between a master and a slave or between a transmitter and a receiver. Hereafter the terms master and slave will be used but it is understood that these terms should not be limiting.

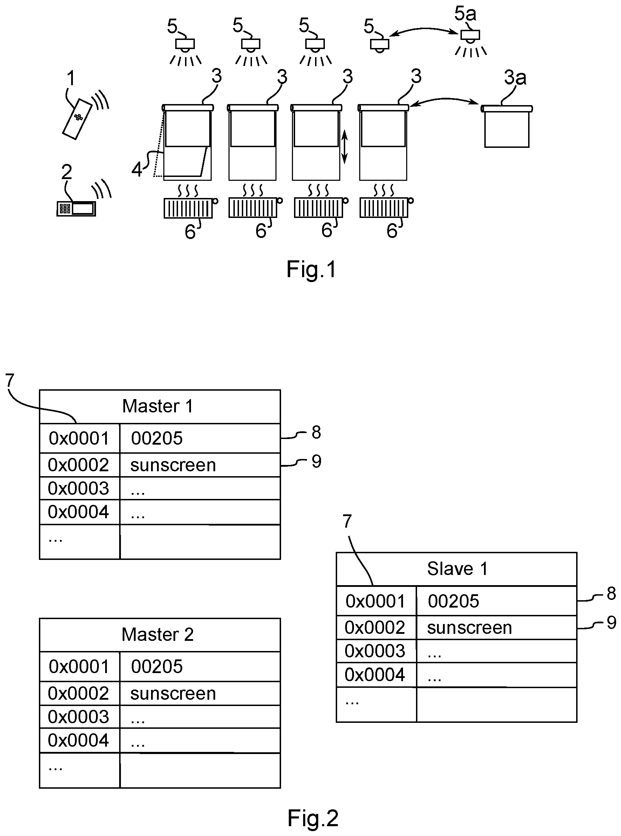

Fig. 1 illustrates automation with 2 masters, e.g. remotes (1-2) and slaves e.g. window shades 3, lighting 5, window opener 4 and thermostats 6. The illustration shows a new light 5a and a new shade 3a which are replacing an existing light and shade.

Fig. 2 illustrates a how the master and slave is configured. The master and slave comprise a transceiver and a processor including a memory to store address data and descriptors. The master and slave have memory registers 7 which store the configuration table 8-9. The slave has an address 8 and a descriptor 9. The automation may employ many masters and slaves so each master registers the address 8 and descriptor 9. Both the master and slave store the same data i.e. address and descriptor information.

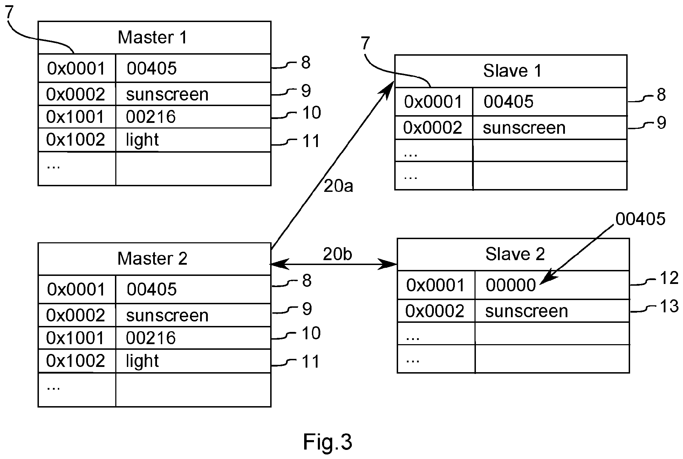

Fig. 3 illustrates how a new slave may replace an old slave. The masters 1-2 have registered one slave1 (with address 8 which has value 00405) and another slave (with address 10 which has value 00216) and so on. It is also registered that slave1 has the descriptor 9 'sunscreen' and the other slave has the descriptor 11 'light'. Now assume slave1 is absent i.e not working and is replaced by a slave2. One master for example master2 registers that slave 1 is absent by scan (20a) and also registers unknown slave2 by scan (20b). Because slave2 has the same descriptor 13 'sunscreen' the address from slave1 (00405) is copied to slave2 (was 00000) and the system is now configured and ready for control by all masters because slave 2 assumes the identity of slave 1. Hereby other separate masters may control the new slave without further configuration effort.

The slaves employ an address that is rewritable by a master. By new slave is understood a slave which is unknown to the master. A new slave may have an empty address i.e. virgin device and a master may assign an address to the slave when the slave is discovered and joins the system. A new slave may have a factory address and a master may register that address. However changing a slave address has the risk that it may confuse other masters which have already registered the slave.

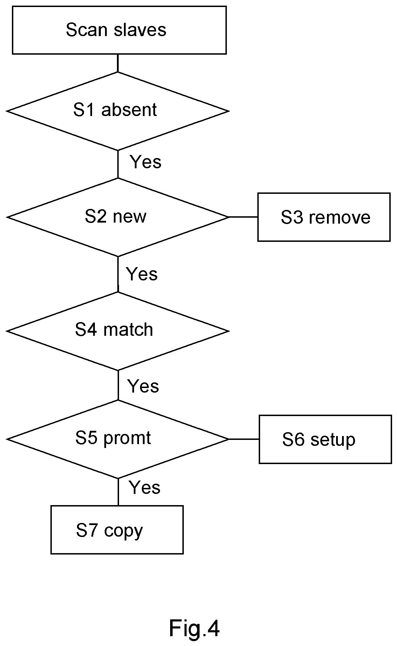

Fig. 4 shows a flowchart. For example a configuration function activated by a user to find new slaves or a triggered system update may perform this method. Optionally the registration of an absent slave or the registration of a new slave may trigger the method. The method may scan or poll the slaves in question. The scanning may for example be based on discover broadcast, interrogation signals or status signals. The scanning may be based on user initiation but may also be based on collected system integrity data etc.

In S1 it is resolved if any registered and known slaves are absent. Slaves not responding may be classified as absent. Slaves causing errors or failing to execute commands may also be classified as absent. Scanning for a slave may include activating a discovery mode of the slave whereby the slave may transmit its address and descriptor.

If S1 is true, then in S2 it is resolved if any unregistered or new slaves are present. This may be done by comparing the scan results with the system table of registered devices i.e. are any slaves unknown. Both address and/or serial number may be compared (i.e rewritable address and permanent address). If no new slaves are present S3 may provide to remove the absent slave so it does not appear among the controllable slaves, but the absent slave data may still remain in the memory registers.

If a new master is present (S2 true) it is resolved in S4 if the absent slave and the new slave have compatible descriptors. For example by comparing if the slaves have the same descriptor as explained later.

The evaluation of at least the descriptor of the absent slave and the descriptor of the new slave is done by a processor in the master, where the descriptors match when they are the same. Optionally the descriptors match when they are the same class (a class defines properties of a slave).

If the old and new slaves in S4 are compatible the user may in S5 confirm that the new slave should replace the absent slave. This may include that the new slave is operated such as for example winks or briefly turns on to signal to a user it is about to replace an absent slave. If the user does not wish to replace the absent slave a manual setup of the new slave may be provided in S6 where descriptors are entered and assigned etc.

If the user confirms the replacement of the slaves in S5 the address and optionally also the user assigned descriptors are copied in S7. In particular at least the address of the absent slave is copied to the new slave whereby several masters may control the new slave without further configuration. Further assigned descriptors to the absent slave may also be copied to the new slave. Copying may be provided by storing a table of the address and the descriptor in a master and transmitting the table to the new slave.

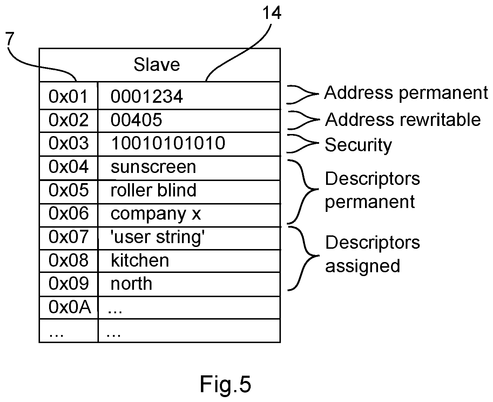

Fig. 5 illustrates examples of memory14. Building automation may employ several data to provide enhanced decentralised automation operation. For example the data may be divided into several categories: address related and descriptor related and security related. Hereby is understood that
1. address related store data like address, ID, serial number, network relations (typical network layer stuff),
2. descriptors store data like type of appliance, room location or class of appliance, user defined names and groups etc.,
3. security related may store security keys and authentication data etc.

Now the example from fig. 5 is explained. An address may further include a permanent address i.e. a serial number (0x01). Such serial number may be a substantially unique number which is write protected so each slave has a permanent address i.e. serial. This may have the advantage that an absent slave which has been erroneously removed may be recovered based on the serial number. Consider a new slave is provided with address from old absent slave. The old slave is later recognized based on the serial number and is assigned a new address, but all other assigned descriptors are re-used and do not have to be setup. The old slave must be recovered this way on each master but the setup of assigned descriptors does not need to be done and hence the recovery is easy. Preferably a recover function is provided by establishing whether a new unregistered slave has a permanent address i.e. serial which is registered. And in that case copy descriptors to the slave except copying the address.

The address includes at least a rewritable address (0x02). Such address may be specific meaning the address is substantially one of a kind and each slave has its own address at least within the system. The address is rewritable so the address may be changed and/or assigned. In one example the new slaves have empty or null address or the address belongs to an address interval reserved for new slaves.

A security identifier may be a system key (0x03). Such system key is shared when a slave is configured. Based on a system key the master/slave may communicate securely by employing encryption and/or authentication. The system key may also define the automation system, so all slaves and masters in same automation system use the same system key.

As explained below descriptors may store useful information which may enhance the configuration of the automation system. The descriptors may be permanent and pre-assigned from factory or the descriptors may be assigned during setup either by the system or the user. Hereafter the two kinds of descriptors i.e. permanent descriptors and assigned descriptors are explained.

A descriptor may include a descriptor of the slave type. By slave type is understood the general kind of function of the slave provides. Such descriptor preferably is permanent and pre-assigned from factory. For example the descriptor (0x04) may be slave type i.e. descriptor such as for example sunscreen, lamp, lock, window, door, gate, meter, sensor, ventilator, heater, cooler, etc. Such descriptor may optionally comprise plural levels, like first level (0x04) 'sunscreen' and second level (0x05) 'roller blind', because a 'sunscreen' is more general and 'roller blind' better defines the slave and may also defines which commands the slave accepts.

A descriptor may define if the slave is for internal / external use so for example sunscreen and illumination slaves may store if they are for indoor or outdoor use. Or the type descriptor may simply include sunscreen internal / sunscreen external.

A descriptor may include the manufacturer (0x06). So the manufacturer of the slave may be identified. This may enhance interoperability and replacement of slaves. Preferably to make sure the serial number does not collide between manufacturers, the manufacturer and serial number may be evaluated together. Said manufacturer descriptor may be permanent and pre-assigned from factory.

A descriptor may store further slave properties. For example in case of an actuator or sunscreen descriptors like stroke length, size, speed etc. may be stored from factory.

As explained below a descriptor may be user assigned or configured during setup. If the user edits such user defined descriptor, then the descriptor can no longer serve to determine if new and old slaves are compatible. But preferably such user assigned descriptor should be copied to a new slave from an absent slave.

A descriptor may be a string (0x07) defining the name of the slave. Such name string may be pre defined by the manufacturer and editable by the user. For example a slave may store "blind new" in the name string from factory which later is changed to "left blind" during setup.

A descriptor may include the location of the slave (0x08). For example location may be: kitchen, garage, bedroom, hall, garden etc. assigned during setup.

A descriptor may include group (0x09) information of the slave i.e. which group(s) the slave belongs to. For example group information may be: group1, group2, group3 or north, south, east etc. assigned during setup.

A descriptor may include network location or relation i.e. include information about which device the slave belongs to. A shade and an actuator may belong to a window. For example a combination of a prefix and an address may provide information about the location or relation of the slave. Preferably this information may be copied to a new slave.

The scanning and copying method disclosed based on Fig 3 and 4. compare the descriptor 13 'sunscreen' to establish that copying should be done and then copy the address to the new slave. It is appreciated that any permanent descriptor may be used to establish if slaves are compatible and copying should be done. In one example two or more permanent descriptors are used to evaluate if the absent slave and the new slave match. For example manufacturer descriptor and slave type descriptor. This has the advantage that greater compatibility is provided, because a new slave from same company is more likely to be compatible. This has the advantage that it increases the likelihood that the new slave really replaces the absent one.

It is also appreciated that any assigned descriptor may be copied to the new slave together with the address.

In case of conflict where several new slaves may replace one or more absent slaves a matching likelihood may be established based on most matching descriptors. Optionally the user may be asked to select among the matching slaves.

One advantage is that replacement of an old or defective slave with a new replacement slave is enhanced. The configuration burden may restrict users from buying a new slave. Users may defer from replacing a defective slave but also defer from buying a new improved slave because the configuration is a burden. But based on the disclosed user friendly slave replacement more units are likely to be replaced and sold.

Another advantage is that the automation can recover from a slave reset due to power loss or if a slave is falsely judged as absent. Because the use of a serial number (permanent address) allows the controller to re-identify the slave and apply the descriptors.

It will be understood that the embodiments described herein are merely exemplary and that variations and modifications of the teachings will still fall within the scope of this invention. For example plural new slaves may be scanned and copied and increasing the number of descriptors will limit the risk of wrong replacement. For example the method steps may have different order so a new slave may first be discovered and subsequently it may be verified if all old devices are present or if any devices are absent. For example RFID may also be employed. For example routing may be applied and use of wireless signals which are retransmitted by wire may be used. For example an address alias may be used. Furthermore, some of the features of the examples of this disclosure may be used to advantage without the corresponding use of other features. As such, the foregoing description should be considered as merely illustrative of the principles and examples of this invention, and not a limitation thereof.

## Claims

1. A method of configuring building automation employing slaves (3-6) comprising at least memory with a rewritable address (8) and a permanent descriptor (9,11,13) whereby absent slaves may be replaced by new slaves, the method comprises:
- scanning for slaves,
- establishing whether registered slaves are absent,
- establishing whether new unregistered slaves are present, **characterized by**:
- evaluating at least the permanent descriptor (9,11,13) of the absent slave and the permanent descriptor (9,11,13) of the new slave, and provided the permanent descriptors match
- copying the address (8) of the absent slave into the rewritable address (8) of the new slave whereby the slave is replaced.

2. A method according to any previous claims comprising a first descriptor and a second descriptor, wherein the first descriptor is permanent and the second descriptor is user assignable and wherein the first descriptor is used for evaluating if the new and absent slave match.

3. A method according to any previous claims wherein based on a successful descriptor evaluation user assignable descriptors like for example name string, room name, compass direction are also copied to the new slave.

4. A method according to any previous claims wherein the address comprises a first rewritable address and a second substantially unique permanent address, whereby optionally a slave may be recovered.

5. A method according to any previous claims wherein a network security key is provided to the new slave, enabling other masters in the automation to securely control the new slave without individual configuration.

6. A method according to any previous claims wherein scanning is adapted to be initiated by a user and succeeding a matching descriptor evaluation, the option of copying the slave is provided to the user.

7. A method according to any previous claims wherein the new slave is operated such as for example winks or briefly turns on to signal to a user it may replace an absent slave.

8. A method according to previous claims wherein establishing whether registered slaves are absent, includes identifying registered slaves which are not responsive or which have errors or which fail to execute commands.

9. A method according to previous claims wherein establishing whether new unregistered slaves are present, includes identifying an unregistered address or an empty address.

10. A method according to any previous claims wherein scanning for a slave includes activating a discovery mode of the slave whereby the slave may transmit its address and descriptor.

11. A method according to any previous claims wherein the descriptor is a descriptor such as for example sunscreen, lamp, lock, window, door, gate, meter, sensor, ventilator, heater, cooler, etc.

12. A method according to any previous claims wherein two or more permanent descriptors are used to evaluate if the absent slave and the new slave match, preferably at least descriptors indicative of the slave manufacturer, type or size.

13. A method according to any previous claims wherein the master is a remote control and the slave is a sun screening such as for example an awning, blind, venetian blind or roller shutter.

## Patentansprüche

1. Verfahren zum Konfigurieren einer Gebäudeautomation, die Slaveeinheiten (3-6) einsetzt, die wenigstens einen Speicher mit einer überschreibbaren Adresse (8) und einem permanenten Deskriptor (9, 11, 13) umfassen, wobei fehlende Slaveeinheiten gegebenenfalls durch neue Slaveeinheiten ersetzt werden und wobei das Verfahren Folgendes umfasst:
- Durchführen eines Suchlaufs für Slaveeinheiten,
- Feststellen, ob registrierte Slaveeinheiten fehlen,
- Feststellen, ob neue nicht-registrierte Slaveeinheiten vorhanden sind,
und durch Folgendes gekennzeichnet ist:
- Auswerten wenigstens des permanenten Deskriptors (9, 11, 13) der fehlenden Slaveeinheit und des permanenten Deskriptors (9, 11, 13) der neuen Slaveeinheit, und, falls die permanenten Deskriptoren übereinstimmen,
- Kopieren der Adresse (8) der fehlenden Slaveeinheit in die überschreibbare Adresse (8) der neuen Slaveeinheit, wodurch die Slaveeinheit ersetzt wird.

2. Verfahren nach einem der vorhergehenden Ansprüche, das einen ersten Deskriptor und einen zweiten Deskriptor umfasst, wobei der erste Deskriptor permanent ist und der zweite Deskriptor vom Benutzer zuweisbar ist und wobei der erste Deskriptor dafür verwendet wird auszuwerten, ob die neue und die fehlende Slaveeinheit übereinstimmen.

3. Verfahren nach einem der vorhergehenden Ansprüche, wobei, basierend auf einer erfolgreichen Deskriptorauswertung, vom Benutzer zuweisbare Deskriptoren, wie beispielsweise eine Namenszeichenfolge, ein Raumname, eine Himmelsrichtung, ebenfalls zur neuen Slaveeinheit kopiert werden.

4. Verfahren nach einem der vorhergehenden Ansprüche, wobei die Adresse eine erste überschreibbare Adresse und eine zweite im Wesentlichen eindeutige permanente Adresse umfasst, wodurch optional eine Slaveeinheit wiederhergestellt werden kann.

5. Verfahren nach einem der vorhergehenden Ansprüche, wobei für die neue Slaveeinheit ein Netzwerk-Sicherheitsschlüssel bereitgestellt wird, was es anderen Mastereinheiten in der Automation ermöglicht, die neue Slaveeinheit ohne eine individuelle Konfiguration gesichert zu steuern.

6. Verfahren nach einem der vorhergehenden Ansprüche, wobei der Suchlauf dafür eingerichtet ist, durch einen Benutzer eingeleitet zu werden, und nach einer übereinstimmenden Deskriptorauswertung die Option zum Kopieren der Slaveeinheit dem Benutzer angeboten wird.

7. Verfahren nach einem der vorhergehenden Ansprüche, wobei die neue Slaveeinheit betätigt wird, so dass sie beispielsweise blinkt oder kurz eingeschaltet wird, um einem Benutzer zu signalisieren, dass sie gegebenenfalls eine fehlende Slaveeinheit ersetzt.

8. Verfahren nach vorhergehenden Ansprüchen, wobei das Feststellen, ob registrierte Slaveeinheiten fehlen, das Erkennen von registrierten Slaveeinheiten beinhaltet, die nicht reagieren oder die Fehler haben oder die Befehle nicht ausführen.

9. Verfahren nach vorhergehenden Ansprüchen, wobei das Feststellen, ob neue nicht-registrierte Slaveeinheiten vorhanden sind, das Erkennen einer nichtregistrierten Adresse oder einer leeren Adresse umfasst.

10. Verfahren nach einem der vorhergehenden Ansprüche, wobei der Suchlauf für eine Slaveeinheit das Aktivieren eines Auffindungsmodus der Slaveeinheit umfasst, wodurch die Slaveeinheit ihre Adresse und ihren Deskriptor überträgt.

11. Verfahren nach einem der vorhergehenden Ansprüche, wobei der Deskriptor ein Deskriptor wie etwa einer der Folgenden ist: Sonnenschutz, Lampe, Schloss, Fenster, Türe, Tor, Messgerät, Sensor, Ventilator, Heizgerät, Kühlgerät etc.

12. Verfahren nach einem der vorhergehenden Ansprüche, wobei zwei oder mehr permanente Deskriptoren verwendet werden, um auszuwerten, ob die fehlende Sucheinheit und die neue Sucheinheit übereinstimmen, vorzugsweise wenigstens Deskriptoren, die den Hersteller, den Typ oder die Größe der Slaveeinheit angeben.

13. Verfahren nach einem der vorhergehenden Ansprüche, wobei die Mastereinheit eine Fernbedienung ist und die Slaveeinheit ein Sonnenschutz ist, wie beispielsweise eine Markise, ein Rollo, eine Jalousie oder ein Rollladen.

## Revendications

1. Procédé de configuration d'automatisation de bâtiment utilisant des esclaves (3-6) comprenant au moins une mémoire avec une adresse réinscriptible (8) et un descripteur permanent (9, 11, 13), moyennant quoi des esclaves absents peuvent être remplacés par de nouveaux esclaves, le procédé comprend :
- le balayage d'esclaves,
- l'établissement du fait que des esclaves enregistrés sont absents,
- l'établissement du fait que de nouveaux esclaves non enregistrés sont présents,
**caractérisé par** :
- l'évaluation d'au moins le descripteur permanent (9, 11, 13) de l'esclave absent et le descripteur permanent (9, 11, 13) du nouvel esclave, et à condition que les descripteurs permanents correspondent,
- la copie de l'adresse (8) de l'esclave absent dans l'adresse réinscriptible (8) du nouvel esclave moyennant quoi l'esclave est remplacé.

2. Procédé selon n'importe quelles revendications précédentes, comprenant un premier descripteur et un deuxième descripteur, dans lequel le premier descripteur est permanent et le deuxième descripteur est attribuable par l'utilisateur et dans lequel le premier descripteur est utilisé pour évaluer si le nouvel esclave et l'esclave absent correspondent.

3. Procédé selon n'importe quelles revendications précédentes, dans lequel, sur la base d'une évaluation de descripteur réussie, des descripteurs attribuables par l'utilisateur comme par exemple une chaîne de nom, un nom de pièce, une direction de boussole, sont également copiés pour le nouvel esclave.

4. Procédé selon n'importe quelles revendications précédentes, dans lequel l'adresse comprend une première adresse réinscriptible et une deuxième adresse permanente sensiblement unique, moyennant quoi un esclave peut être éventuellement récupéré.

5. Procédé selon n'importe quelles revendications précédentes, dans lequel une clé de sécurité de réseau est fournie au nouvel esclave, en permettant à d'autres maîtres dans l'automatisation de commander de manière sécurisée le nouvel esclave sans configuration individuelle.

6. Procédé selon n'importe quelles revendications précédentes, dans lequel le balayage est adapté pour être lancé par un utilisateur et à la suite d'une évaluation de descripteurs correspondants, l'option de copie de l'esclave est fournie à l'utilisateur.

7. Procédé selon n'importe quelles revendications précédentes, dans lequel le nouvel esclave est utilisé de manière, par exemple, à clignoter ou s'activer brièvement pour signaler à un utilisateur qu'il peut remplacer un esclave absent.

8. Procédé selon n'importe quelles revendications précédentes, dans lequel l'établissement du fait que des esclaves enregistrés sont absents comprend l'identification d'esclaves enregistrés qui ne répondent pas ou qui ont des erreurs ou qui échouent dans l'exécution de commandes.

9. Procédé selon n'importe quelles revendications précédentes, dans lequel l'établissement du fait que de nouveaux esclaves non enregistrés sont présents comprend l'identification d'une adresse non enregistrée ou d'une adresse vide.

10. Procédé selon n'importe quelles revendications précédentes, dans lequel le balayage d'un esclave comprend l'activation d'un mode de découverte de l'esclave, moyennant quoi l'esclave peut transmettre son adresse et son descripteur.

11. Procédé selon n'importe quelles revendications précédentes, dans lequel le descripteur est un descripteur tel que par exemple un dispositif de protection solaire, une lampe, une serrure, une fenêtre, une porte, une grille, un compteur, un capteur, un ventilateur, un dispositif de chauffage, un dispositif de refroidissement, etc.

12. Procédé selon n'importe quelles revendications précédentes, dans lequel au moins deux descripteurs permanents sont utilisés pour évaluer si l'esclave absent et le nouvel esclave correspondent, de préférence au moins des descripteurs indicatifs du fabricant, du type ou de la taille de l'esclave.

13. Procédé selon n'importe quelles revendications précédentes, dans lequel le maître est une télécommande et l'esclave est un dispositif de protection solaire tel que, par exemple, un auvent, un store, un store vénitien ou un volet roulant.
